# EUROPEAN PATENT APPLICATION

(11) **EP 1 233 354 A1**
(43) Date of publication of application: **21.08.2002**
(21) Application number: 01106043.1
(22) Date of filing: 12.03.2001
(51) Int. Cl.: G06F 17/60

(54) **Rating information publishing system**

(30) Priority: 15.02.2001 JP 2001038176
(71) Applicant: Hitachi, Ltd., Chiyoda-ku, Tokyo 101-8010 (JP)
(72) Inventor: Susaki, Seiichi, Hitachi Ltd., Tokyo 100-8220 (JP)
(74) Representative: Strehl Schübel-Hopf & Partner

(57) **Abstract**

A rating browser may easily confirm the validity or invalidity of an evaluation result of a rating target disclosed over a WWW system, as to whether the evaluation result is truly based on the evaluation conducted by a rating performer.

An insrestor/customer 120 (rating browser device) sends a Web page acquisition request to a private business owner/firm 110 (rating target device) (S600). The private business owner/firm 110, in response to the request, sends back the requested Web page to the investor/customer 120 (S602). The investor/customer 120, upon the reception of the Web page, verifies the validity of a rating mark attached to that Web page (S604, S605). The investor/customer 120, after requesting a rating company 100 (rating performer device) to further verify the validity of the rating mark (S606), obtains detailed corporate information on the private business owner/firm 110 (S611-S614), if necessary.

## Description

This application claims a priority based on Japanese Patent Application No. 2001-38176 filed on February 15, 2001, the entire contents of which are incorporated herein by reference for all purposes.

### CROSS REFERENCE TO RELATED APPLICATIONS

This application is related to application Ser. No. 09/90,419 filed on June 4, 1998, application Ser. No. 09/621,697 filed on July 21, 2000. application Ser. No. 09/385,000 filed on August 30, 1999, and application Ser. No. 09/371,526 filed on, August 10, 1999

### BACKGROUND OF THE INVENTION

The present invention relates to a system for disclosing information via a network, more particularly, to a system for disclosing rating information using a WWW (World Wide Web) system.

During late years, the World Wide Web (WWW) has come into widespread use as a tool for disclosing or transmitting information to a number of users over an open network such as the Internet.

A WWW system comprises a web server (server program) and a web client (browser program) and provides a graphical user interface (GUI) that is superior in its operability. and at the same time, it also provides users a simple means for referencing various relative information via hyperlink connections so that it is also superior in the user utility. The rapid growth of the Internet to date owes largely to this WWW system.

Recently noticeable is the movement attempting to use this WWW system also in business applications besides mere data transmission applications. For instance, an electronic commerce system is a typical example of such business applications, in which a WWW system is used for disclosure of product information and for payment. The electronic commerce system is outlined in "Information Processing" Vol. 38, No.9, pp.752-810 (publisher: Koji Iizuka, Information Processing Society of Japan).

Proprietorship or venture company, and corporation conducting business transactions in the real world, not in the virtual world such as the Internet, attempt to draw business funds from investors etc. The investors evaluate these private business owners and firms in order to determine whether or not to provide monetary support to their businesses based on the evaluation results, and they may sometimes use the results of evaluations conducted by corporate rating agencies as one means for making decision.

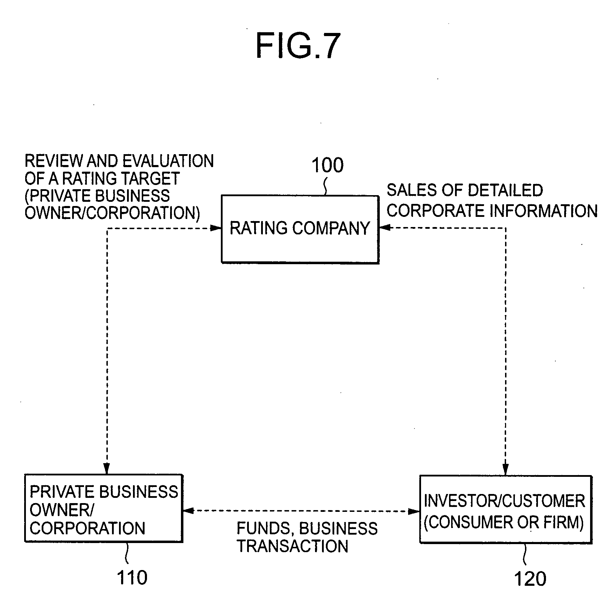

Fig. 7 is a diagram showing the relationship among the three parties including a rating company, a private business owner etc., and an investor in the real world.

A corporate rating agency 100 reviews and evaluates a private business owner or firm 110 from various angles, and sells the resultant detailed corporate information to inventors, consumers and firms. An inventor 120 uses this detailed corporate information purchased from the rating company 100 to evaluate the private business owner/firm 110, and based on this evaluation result, determines whether or not to fund that private business owner or firm 110.

The rating company earns its profits mainly through the sales of those detailed corporate information to investors, consumers or firms, however, it may sometimes disclose rating information indicating, not the detailed corporate information itself, but only a limited information of any particular firm at no charge (i.e. the rating of the firm on a scale of 1 to 10). This is provided, for example, to promote the authority and credibility of the detailed corporate information that the rating agency attempts to sell.

From the viewpoint of private business owners or firms, especially of those highly rated, such the rating information provided by the rating agency would be an important factor in appealing themselves to investors or consumers. Accordingly, it is extremely beneficial for a private business owner or a firm to voluntarily disclose its rating information over a network using a WWW system etc. to gain wide recognition from a large number of investors or customers (consumers or other firms).

However, there are following problems when a firm attempts to disclose its rating information over a network using a conventional WWW system.

That is, there is no simple means available for investors who browse the disclosed rating information to verify whether this rating information is truly based on the evaluation by a rating company, or whether there truly is no falsified record. If the browsed rating information could not be identified as a valid data, then it cannot be accounted as a basis for determining whether or not to provide monetary support to that company. For potential customers such as consumers or other firms, too, such information won't serve as a basis in making judgment on the credibility of that firm (whether it is adequate to deal with that firm). As a result, such disclosure of the rating information would be worthless also for that private business owner or the firm.

For corporate rating agencies, there could be a merit if private business owners and firms start actively using such rating information because those agencies would have a chance to earn profits by selling the rating information to those private business owners and firms while such rating information would otherwise be used merely as a promotion tool for the sales of detailed corporate information. However, once falsified rating information starts being distributed in the market, the authority and credibility of the detailed corporate information themselves, that is the source of income for the corporate rating agencies, would be damaged, and this type of business would no longer be viable.

### SUMMARY OF THE INVENTION

The present invention provides a rating information publishing system which allows browsers to easily confirm the validity of rating information disclosed over a network using a WWW system.

The present invention is applicable, not only to the rating of private business owners and firms by rating company, but also to any evaluation or rating system implementation for variety of matters over a network. Hereinafter, an entity (natural person, corporate body etc.) performing the rating of any matter is generally referred to as "rating performer", an entity subject to the evaluation and rating by the rating performer is generally referred to as "rating target", and an entity to browse the evaluation and rating information of the rating target is generally referred to as a "rating browser".

According to the first embodiment of the present invention, a rating information publishing system comprises a rating browser device, a rating target device, and a rating performer device that are interconnected via a network, and the rating performer device comprises a unit for generating rating marks for rating targets, a rating mark database for managing the generated rating marks, a unit for receiving a rating mark acquisition request from the rating target device, and a unit for transmitting to the rating target device a corresponding rating mark in response to such an acquisition request. The rating target device comprises a unit to send a rating mark acquisition request to the rating performer device, a unit for receiving a rating mark from the rating performer device, a Web page database for holding Web pages attached with the rating mark in a manner that the Web pages are accessible from the rating browser device, a unit for receiving a rating-mark-attached Web page acquisition request from the rating browser device, and a unit for sending the rating-mark-attached Web page to the rating browser device by referencing the Web page database in response to the acquisition request. The rating browser device comprises a unit for sending the rating-mark-attached Web page acquisition request to the rating target device, a unit for receiving the rating-mark-attached Web page from the rating target device, a verification unit for verifying the validity of the rating mark of the rating-mark-attached Web page, and a unit for displaying the rating-mark-attached Web page and the verification result.

In this case, the rating performer device may further comprise a unit for modifying the status information associated with the rating marks being managed within the rating mark database, a unit for receiving a rating mark verification request from the rating browser device, and a unit for verifying the validity of the rating mark by referencing the rating mark database in response to the verification request and sending the result back to the rating browser device, and the rating browser device may further comprise a unit for sending the verification request for verifying the validity of the rating mark to the rating performer device, and a unit for receiving the result of the verification request from the rating performer device.

According to the second aspect of the present invention, a rating information publishing system comprises a rating browser device, a rating target device and a rating performer device interconnected via a network, and in this second rating information publishing system, the rating performer device comprises a rating mark database for managing rating marks, a unit for receiving a rating mark verification request from the rating browser device, and a unit for verifying the validity of the rating mark by referencing the rating mark database in response to the verification request from the rating browser device and sending the result back to the rating browser device. The rating target device comprises a Web page database for holding Web pages attached with the rating mark in a manner that the Web pages are accessible from the rating browser device, a unit for receiving a rating-mark-attached Web page acquisition request from the rating browser device, and a unit for sending the rating-mark-attached Web page to the rating browser device by referencing the Web page database in response to the acquisition request. The rating browser device comprises a unit for sending the rating-mark-attached Web page acquisition request to the rating target device, a unit for receiving the rating-mark-attached Web page from the rating target device, a verification unit for verifying the validity of the rating mark included in the rating-mark-attached Web page, a unit for sending a verification request for verifying the validity of the rating mark to the rating performer device, a unit for receiving the result of the verification request from the rating performer device, and a unit for displaying the rating-mark-attached Web page and the verification result.

In this case, the rating performer device may further comprise a unit for receiving a rating mark acquisition request from the rating target device, a unit for generating a rating mark for the rating target based on the rating mark acquisition request, a unit for registering the generated rating mark into the rating mark database, and a unit for sending the generated rating mark to the rating target device which has requested the acquisition of the rating mark, and the rating target device may further comprise a unit for sending a rating mark acquisition request to the rating performer device, and a unit for receiving a rating mark from the rating performer device.

In the rating information publishing system according to either of the first and second aspects, the rating performer device may further comprise a unit for notifying to the rating target device that the rating target may acquire a rating mark, and the rating target device may further comprise a unit for receiving the notification from the rating performer device.

The rating mark database may hold detailed information on rating targets, and in this case, the rating performer device may further comprise a unit for receiving an acquisition request for the detailed information from the rating browser, and a unit for sending corresponding detailed information to the rating browser by referencing the rating mark database in response to the detailed information acquisition request, and the rating browser device may further comprise a unit for sending the acquisition request for the detailed information on the rating target to the rating performer device, and a unit for receiving the detailed information from the rating performer device.

The aforementioned verification unit employs, for example, a digital signature technology and a digital watermark technology.

In a rating information disclosure method according to the present invention, a rating performer generates a rating mark indicating the assessment on a rating target, based on the review conducted over the rating target and sends this rating mark to the rating target. The rating target publishes a Web page attached with the rating mark obtained from the rating performer, and a rating browser obtains the rating-mark-attached Web page, and verifies the validity of the rating mark by using the rating mark validity verification unit.

In this case, the rating performer may be so configured to manage the status information of rating marks it has generated, and in a case where the assessment on a rating target is modified after a previous rating mark has already been sent to the rating target, it invalidates the previous rating mark by changing the status information, so that when the rating browser sends rating mark validity verification request to the rating performer to check the validity of the rating mark of a rating-mark-attached Web page that has been published by the rating target, the rating performer, in response to the rating mark validity verification request from the rating browser, may report the validity or invalidity of the rating mark to the rating browser by referencing the status information of that rating mark.

In the above case, the rating performer may also be configured to manage the detailed information of rating targets, so that a rating browser may order detailed information on a rating target, and in response to the order for the detailed information on the rating target, the rating performer may send the corresponding detailed information to the rating browser.

The above validity verification unit may use the digital signature and digital watermark technologies, or a hyperlink technology of the WWW system.

The rating browser device according to the present invention comprises a unit for sending an acquisition request for a Web page to a rating target device, a unit for analyzing and displaying the obtained Web page, and a rating mark verification unit for confirming the validity of the rating mark when the Web page included a rating mark.

In this case, the above rating mark verification unit may be configured to confirm the validity based on the information included in the rating mark and the information associated with the obtained Web page. The rating mark verification unit may also be configured to request the validity verification of the rating mark to a rating performer device managing that rating mark, and to confirm the validity of the rating mark based on the verification result returned from the rating performer device.

The rating performer device according to the present invention comprises a rating mark database for managing rating marks, a unit for receiving a request for checking the validity of a rating mark, a unit for determining the status of the rating mark through a search in the rating mark database in response to the verification request, and a unit for sending the determination result to the requester.

In this case, the rating performer device may further comprise a rating mark issuance unit for generating a rating mark based on the information associated with the Web page to which the generated rating mark is attached and image data representing the rating in response to a rating mark acquisition request.

A storage medium according to the present invention is a storage medium storing a rating mark verification program to be executed by the rating browser device. The rating mark verification program executes a step of verifying the validity of a rating mark based on the information contained in the rating mark and the information associated with a Web page when the Web page obtained by the rating browser device included a rating mark, and a step of requesting the validity verification of the rating mark to the rating performer device managing that rating mark, and a step of confirming the validity of the rating mark based on the verification result from the rating performer device.

These and other benefits are described throughout the present specification. A further understanding of the nature and advantages of the invention may be realized by reference to the remaining portions of the specification and the attached drawings.

### BRIEF DESCRIPTION OF THE DRAWINGS

Fig. 1 is a diagram showing the relationship among the entities using a corporate rating information publishing system according to the present invention.
Fig. 2 is a schematic diagram of the corporate rating information publishing system according to the presen invention.
Fig. 3 is a block diagram showing a hardware configuration of the rating browser device, rating targe device, and rating performer device.
Figs. 4A to 4C are a diagram showing software configurations of the rating browser device, rating targe device, and rating performer device.
Fig. 5 is a flow chart for illustrating a procedur from a step for a private business owner/firm 110 to purchas a rating mark from the rating company 100 to a step of disclosing the rating mark on a Web page of its Web site
Fig. 6 is a flow chart illustrating the steps for a investor/customer 120 to obtain detailed corporat information from a rating company 100 after browsing a We page published by a private business owner/firm 110 an verifying the rating mark.
Fig. 7 is a diagram showing a conventional relationship among the entities in the real world.

### DETAILED DESCRIPTION OF THE INVENTION

### Embodiment

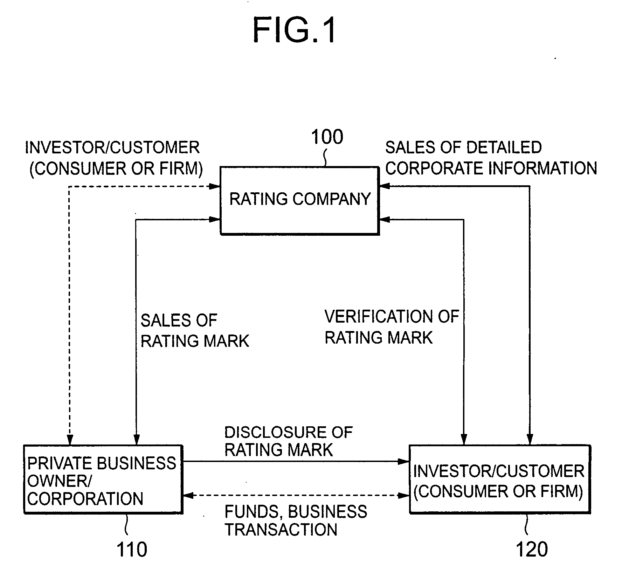

Fig. 1 is a diagram showing the relationship among entities using a corporate rating information publishing system to which the present invention is applied.

As shown in Fig. 1, the corporate rating disclosure system in the present embodiment is the one used by a rating company 100, a private business owner/firm 110, and an investor/customer (consumer or other firms) 120. In Fig. 1, the broken lines represent the steps identical to those practiced in the real world shown in Fig. 7, and solid lines represent those additional, or modified steps in the corporate rating information system of the present invention.

As seen in Fig. 1, in the present embodiment, the steps of selling, disclosing and verifying a rating mark are added. In the present embodiment, a transaction of detailed corporate information, which has conventionally been conducted off-line, may be conducted online, so that in Fig. 1, the step of selling the detailed corporate information is represented by a solid line instead of a broken line.

The rating company 100 reviews and evaluates the private business owner/firm 110, and sells a rating mark based on the evaluation result to the private business owner/firm 110. A rating mark is a visible image data which provides a validity verification function. The details of the rating mark will be described later.

The rating company 100, in response to a rating mark verification request from the investor/customer 120, verifies the validity of the rating mark, and reports the verification result. It sells the detailed corporate information on the private business owner/firm 110 to the investor/customer 120.

The private business owner/firm 110 discloses its rating mark purchased from the rating company 100 to the investor/customer 120 via a WWW system.

The investor/customer 120 refers the rating mark disclosed by the private business owner/firm 110, and requests the rating company 100 to verify the validity of that rating mark. In this way, it confirms the validity of the evaluation result of the private business owner/firm 110, and determines whether or not to fund, or purchase products from, the private business owner/firm 110.

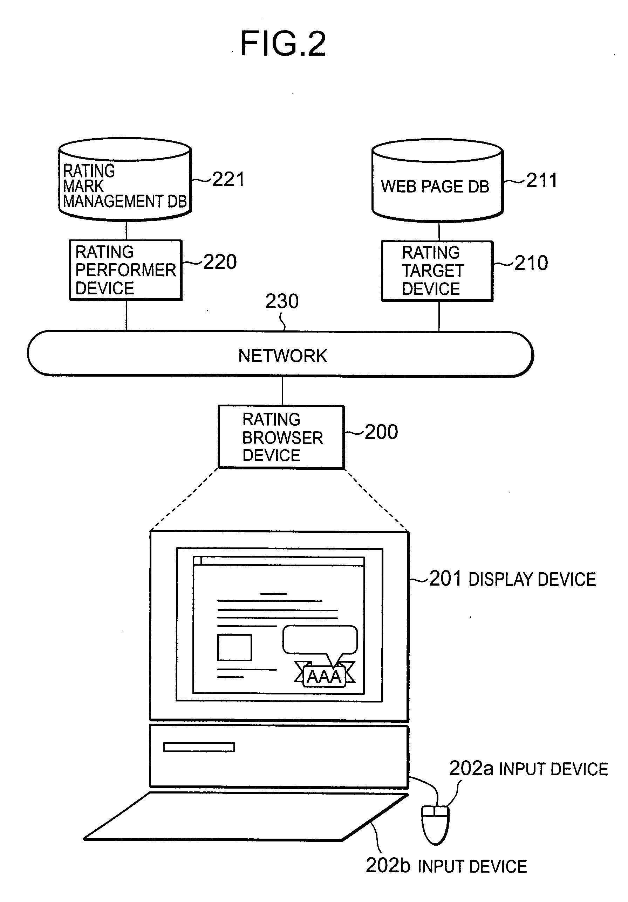

Fig. 2 is a block diagram showing a system configuration of the corporate rating information publishing system according to the present embodiment.

As shown in Fig. 2, the corporate rating information publishing system of the present embodiment comprises a rating browser device 200 used by the investor/customer 120, a rating target device 210 used by the private business owner/firm 110, and a rating performer device 220 used by the rating company 100, all of which are interconnected via a network 230 such as the Internet.

The rating browser device 200 may consist of, for example, a regular personal computer (PC) or a workstation (WS), which comprises a display device 201 for displaying text or image data to the investor/customer 120, and input devices 202a and 202b allowing the investor/customer 120 to input data or commands. The investor/customer 120 uses this rating browser device 200 to exchange data with the rating company 100 and the private business owner/firm 110.

The rating target device 210 may comprise, for example, a regular PC or a WS, and is used by the private business owner/firm 110 to generate its own Web pages, and to exchange data with the rating company 100 and the investor/customer 120 via the network 230.

The rating target device 210 is a server operated by a WWW server program, including a Web page database (DB) 211, and it sends out a Web page stored in the Web page DB 211 in response to a request (i.e. GET request) from the rating browser device 200. The Web page transmitted is then displayed on the display device 201 of the rating browser device 200.

The rating performer device 220 may comprise, for example, a regular PC or a WS, and it comprises a rating mark database (DB) 221. The rating company 100 uses this rating performer device 220 to sell or send a rating mark in response to a request from the private business owner/firm 110, and also to verify the validity of a rating mark by referencing the rating mark management DB 221 in response to the request from the investor/customer 120, and to return the result to the investor/customer 120.

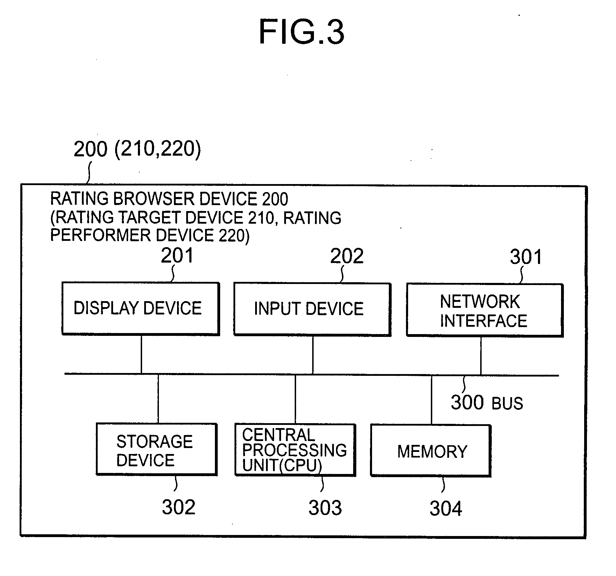

Fig. 3 is a diagram showing a hardware configuration of the rating browser device 200, rating target device 210 and rating performer device 220. Herein, the rating browser device 200, the rating target device 210 and the rating performer device 220 are explained as having the same configuration.

As shown in Fig. 3, each of the rating browser device, the rating target device 210, and the rating performer device 220 comprises a display device 201, an input device 202, a network interface 301, a storage device 302, a central processing unit (CPU) 303, and a memory 304, and these components are interconnected through a bus 300.

The display device 201 is used for displaying messages etc to the user, and is constituted by i.e. a CRT or a liquid crystal display.

The input device 202 is used to allow the user to input data or commands, and is constituted by i.e. a keyboard and a mouse.

The network interface 301 is used to exchange programs or data with other devices via the network 230.

The storage device 302 is a nonvolatile storage device used for storing programs and data used by the each of the devices 200, 210, and 220, and it may be constituted by a hard disk or a floppy disk etc. The storage device 302 of the rating target device 210 contains the Web page DB 211, and the storage device4 302 of the rating performer device contains the rating mark management DB 221.

The central processing unit (CPU) 303 provides centralized control over the respective components of each of the rating browser device 200, the rating target device 210 or the rating performer device 220, as well as various computation functions.

The memory 304 is used for temporarily storing the programs and data necessary for the CPU 303 to perform the above processes.

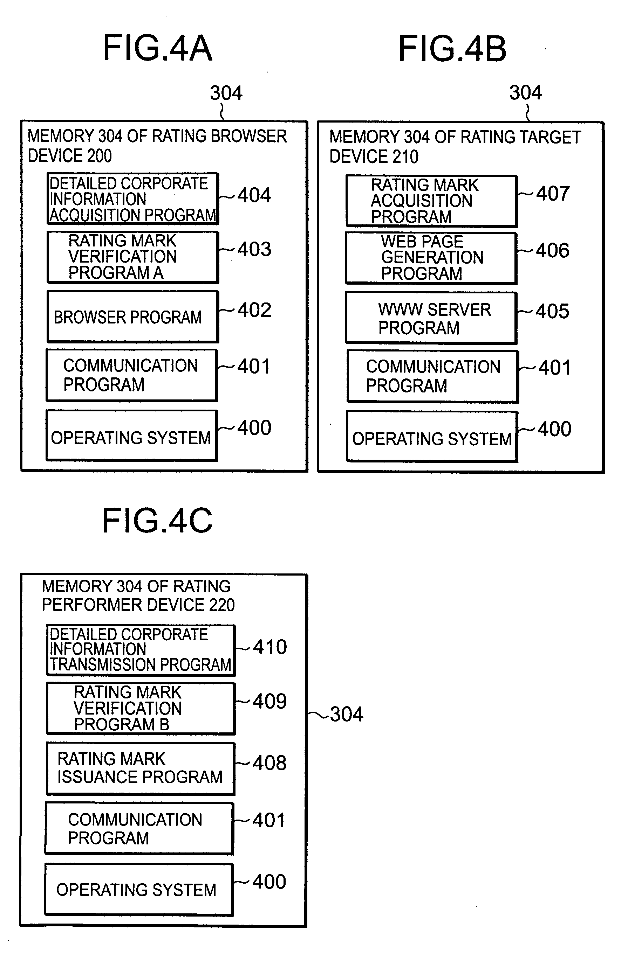

Fig. 4 is a diagram showing the respective software configurations of the rating browser device 200, the rating target device 210 and the rating performer device 220.

As shown in Fig. 4A , the software configuration of the rating browser device 200 comprises an operating system (OS) 400, a communication program 401, a browser program 402, a rating mark verification program A 403, and a detailed corporate information acquisition program 404.

As shown in Fig. 4B, the software configuration of the rating target device 210 comprises an OS 400, a communication program 401, a WWW server program 405, a Web page generation program 406, and a rating mark acquisition program 407.

As shown in Fig. 4C, the software configuration of the rating performer device 220 comprises an OS 400, a comfunication program 401, a rating mark issuance program 408, a rating mark verification program B 409, and a detailed corporate information transmission program 410.

The OS 400 provided on the rating browser device 200, the rating target device 210, and the rating performer device 220 is a basic program for implementing functions such as file management (including DB management), process management or device management in order to provide centralized control over the respective devices.

The communication program 401 is a program for allowing a device to exchange data with other devices.

The browser program 402 provided on the rating browser device 200 is a program to communicate with the WWW server program 405 provided on the rating target device 210 to download and browse Web pages stored within the Web page DB 211.

The rating mark verification program A 403 is a program to perform various processes associated with the validity verification of a rating mark attached to a Web page downloaded from the rating target device 210.

The detailed corporate information acquisition program 404 is a program to communicate with the detailed corporate information transmission program 410 to obtain the detailed corporate information on the private business owner/firm 110.

The WWW server program 405 provided on the rating target device 210 is a program to perform a sending process of a requested Web page stored in the Web page DB 211 in response to a request from the browser program 402 provided on the rating browser device 200.

The Web page generation program 406 is a program allowing the user to generate Web pages and to store the generated Web pages into the Web page DB 211.

The rating mark acquisition program 407 is a program to communicate with the rating mark issuance program 408 provided on the rating performer device 220 to acquire a rating mark to be attached to the Web pages.

The rating mark issuance program 408 provided on the rating performer device 220 is a program to communicate with the rating mark acquisition program 407 provided on the rating target device 210 to generate, issue, and manage the rating mark to be attached to the Web pages.

The rating mark verification program B 409 is a program to perform various processes associated with the rating mark validity verification that is requested by the rating mark verification program A 403 provided on the rating browser device 200.

The detailed corporate information transmission program 410 is a program to communicate with the detailed corporate information acquisition program 404 provided on the rating browser device 200 to transmit the detailed corporate information of the requested private business owner/firm 110.

The above programs 400 through 410 are deployed via a portable storage medium such as CD-ROM etc., or via a network, installed in the hard disk etc. of the respective devices, and loaded to the memory 304 to be executed by the CPU 303.

The operation of the corporate rating information publishing system of the present embodiment will now be explained.

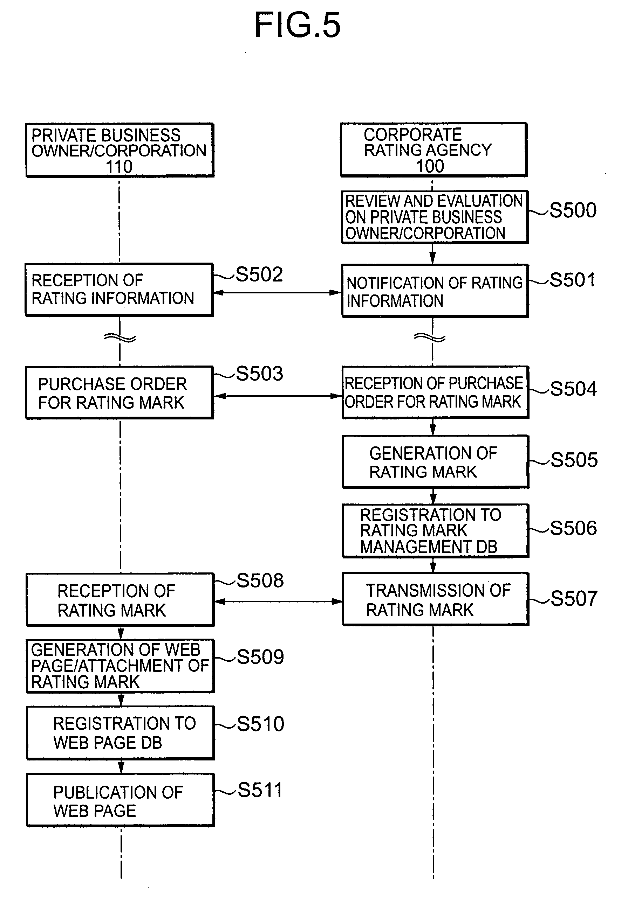

Fig. 5 is a diagram illustrating a procedure from a step for a private business owner/firm 110 to purchase a rating mark from the rating company 100 to a step of disclosing the rating mark on a Web page for publication in its Web site.

In Fig. 5, the rating performer device 220 is used for those process steps performed by the rating company 100, and the rating target device 210 is used for those process steps performed by the private business owner/firm 110.

The rating company 100, prior to the sales of rating marks, conducts study and evaluation on each individual private business owner/firm 110, to determine the ratings of the respective private business owners/firms 110 (S500).

The frequency of this evaluation process, the number of ranks, the rating criteria for the respective ranks and so forth may be defined by each individual rating company 100 according to its own policy.

The rating company 100 individually notifies the rating information to each private business owner/firm 110 to inform the private business owner/firm 110 that it may obtain a corresponding rating mark (S501). In response to the reception of this notification (S502), the private business owner/firm 100 consider whether or not to place a purchase order for this rating mark according to the informed rating information etc. The steps S501 and S502 are the process steps provided for the purpose of sales promotion of the rating mark, targeting private business owners/firms 110.

The private business owner/firm 110 who decided to purchase the rating mark after consideration, sends a purchase order for the rating mark to the rating company 100 (S503).

The rating company 100, in response to the reception of the purchase order for the rating mark from the private business owner/firm 110 (S504). generates (S505) a rating mark for that private business owner/firm 110 based on the evaluation on the private business owner/firm 110.

The rating mark is an image data with a given design, which allows the rating information and its validity to be visually recognized. As for such generation and verification method, the one disclosed in Japanese Patent Laid-Open No. JP-A-11239129 may be used (corresponding US Application No. 09/081,555. Application Date: May 20, 1998, corresponding US Pat. No. 6,131,162, the disclosure of which is hereby incorporated by reference for all purposes).

According to the method disclosed in the above reference material, the validity of a mark is made visually recognizable to a user of a browser device by combining the mark with an authentication data in which a digital signature is embedded in a material image data, of the mark or in the web site address (URL etc.) at which the Web page is viewed, using the digital watermark technology. The present embodiment as described herein, uses the generation/verification method disclosed in the above reference material for the generation and verification of the rating mark.

In this case, at the point where the purchase order is sent from the private business owner/firm 110 (S503), the URL of the Web site on which the Web page is published etc is sent to the rating company 100 as the required information for the issuance of the rating mark.

A rating mark may also be generated through any other method as long as it is an image data that is visible and provides a validity check function. For example, any conventional image data indicating the corresponding rating information may be used as a rating mark, and for this rating mark, a private business owner/firm 110 may set the link information reaching to the rating company 100 when generating a Web page, so that the validity of the rating mark can be verified at the linked Web page.

The rating company 100 registers the rating mark generated in the above manner into the rating mark management DB in a manner that they are associated with the ID information of the private business owner/firm 110 (i.e. name etc.) (S506), and at the same time, sends the rating mark to the private business owner/firm 110 (S507).

After receiving the rating mark from the rating company 100 (S508), the private business owner/firm 110 generates its Web page and attach that rating mark to this Web page (S509). Thereafter, the Web page is stored into the Web page DB 211 in a manner that it may be accessed by the investor/customer 120 (S510), thereby to publish the Web page for public view (S511).

The payment for the rating mark from the private business owner/firm 110 to the rating company 100 may be made via an adequate method (i.e. direct deposit or electronic money etc.).

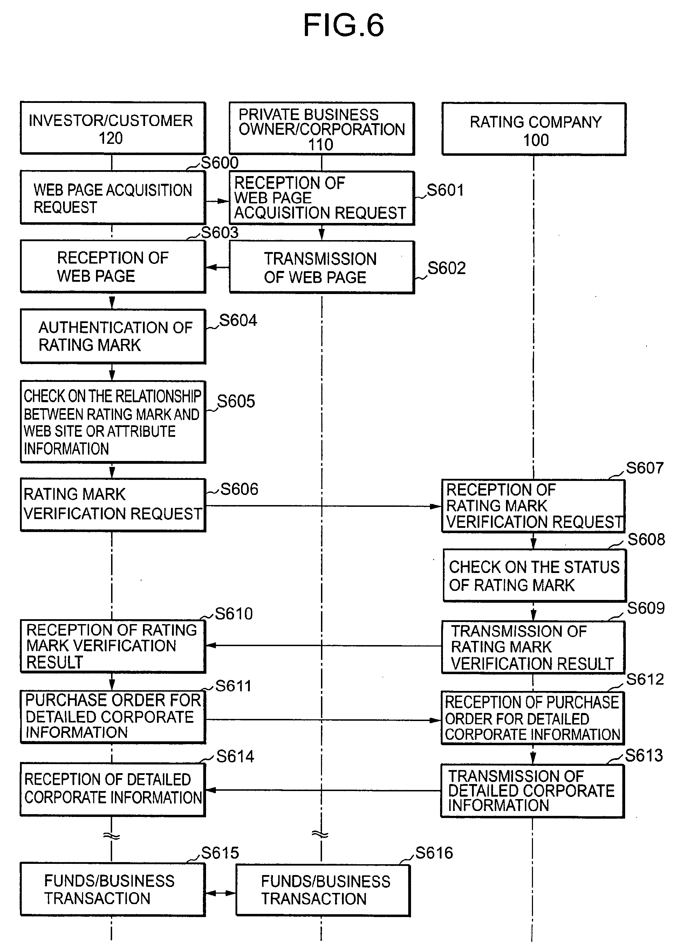

Fig. 6 is a flow chart illustrating the steps for an investor/customer 120 to obtain detailed corporate information from a rating company 100 after browsing a Web page published by the private business owner/firm 110 and verifying the rating mark.

In Fig. 6, the rating performer device 220 is used for the process steps initiated by the rating company 100, the rating target device 210 is used for the process steps initiated by the private business owner/firm 110, and the rating browser device 200 is used for the process steps initiated by the investor/consumer 120.

The investor/customer 120 sends an acquisition request (S600) to the Web site of the private business owner/firm 110 which, the investor/consumer 120 considers to provide monetary support to, or to have business transaction with, in order to obtain a Web page including the rating mark that would serve as one basis for the decision making.

The private business owner/firm 110, in response to the acquisition request (S601), initiates a search over the Web page DB 211, and returns the corresponding Web page to the investor/customer 120 (S602).

Upon the reception of the requested Web page (S603), the investor/customer 120 first checks the authentication of the rating mark itself attached to the received Web page by verifying the signature-embedded original image that has been combined with the rating mark (S604). By verifying the address information of the Web site attached with the signature-embedded rating mark, the fact that this rating mark has been attached to the Web page of that Web site is confirmed as being, or not being, the fact that has been grafted by the rating company 100. Similarly, by verifying the attribute information (effective date etc.) of the' signature-embedded rating mark, the validity of the rating mark is confirmed (S605).

The rating mark verification process mark may be configured to take place automatically upon the reception of a rating-mark-attached Web page, or to be invoked when a user clicks the rating mark. In the latter case, the verification process may be configured to be executed when "Verification" process is selected from a menu screen, which would be displayed in response to a click on the rating mark by the user.

Where the rating mark is found to be invalid during the course of the verification process steps, such a fact is notified to the investor/customer 120 through screen display etc. of the result.

Where the rating mark is found to be valid, the investor/customer 120 requests the rating company 100 to verify the validity of the rating mark (S606). The validity verification step at this point is provided to check those events that could not have been predicted at the time of the issuance of the rating mark, such as a change of the rating occurred while in the effective period due to various circumstances.

A rating mark validity verification request may be executed by, for example, selecting "Verification Request" process from a menu screen which would be displayed in response to a click on the rating mark. This validity check may alternatively be configured to take place by separately accessing to the Web site of the rating company 100, and entering necessary information (i.e. the URL etc. of the Web page including that rating mark).

Upon the reception of the rating mark validity verification request (S607), the rating company 100 references to the rating mark management DB 221 to check the information on the status (valid/invalid) of that rating mark (S608), and returns the result to the investor/customer 120 (S609).

The rating company 100 manages each issued rating mark in the rating mark management DB 221, keeping track of whether it is valid or invalid, and for example, when any change occurs in a rating during an effective period, the status of the corresponding rating mark is changed from valid to invalid.

Upon the reception of the rating mark validity verification result from the rating company 100 (S610), the investor/customer 120 determines the validity of the rating mark. Where the rating mark is found to be invalid as a result of the determination, such a fact is notified to the investor/customer 120 through screen display etc.

In the above steps, the result of the rating mark validity verification initiated on the side of the investor/customer 120 is displayed on the display device 201 as shown in Fig. 2, specifying in a dialog box, for example. "This is an authentic mark" (or "This is a falsified mark/This mark has been expired"), and the investor/customer 120 would know the result by viewing this dialog box. Any other method, such as a method using voice, may also be used.

When the investor/customer 120 decided to place an order for further information (detailed corporate information) on that private business owner/firm 110 after considering the rating information indicated by the rating mark that has been found valid, the investor/customer 120 sends a purchase order for the detailed corporate information to the rating company 100 (S611).

The purchase order for the detailed corporate information may be executed by, for example, selecting "Purchase Detailed Information" process from a menu screen, whidh would be displayed in response to a click on the rating mark. The purchase order may alternatively executed by, for example, separately accessing the Web site of the rating company 100, and entering necessary information.

Upon the reception of the purchase order (S612), the rating company 100 retrieves the corresponding detailed corporate information, and sends that requested detailed corporate information to the investor/customer 120 (S613). The detailed corporate information of each private business owner/firm 110 is managed by, for example, the rating mark management DB 221.

After receiving the detailed corporate information (S614), the investor/customer 120 considers whether or not to fund that private business owner/firm 110, or to have a business transaction with that private business owner/firm 110 based on this detailed corporate information.

The consideration payment for the detailed corporate information from the investor/customer 120 to the rating company 100 may be made via an adequate method (i.e. direct deposit or electronic money etc.).

Where the investor/customer 120 decided to provide monetary support, or to have a business transaction, as a result of the consideration, such the monetary support or business transaction would take place between the private business owner/firm 110 and the investor/customer 120 (S615. S616).

As explained in the above, in the present embodiment, a visible image data called a rating mark and a rating target who discloses its evaluation result using the rating mark are associated, and a rating browser uses those to verify the validity. Also, a rating performer provides further assurance of the validity of the rating mark.

As a result, according to the present embodiment, using a WWW system, a rating browser may easily verify whether or not an evaluation result of any rating target publicly disclosed over a network is a valid one which is based on the evaluation of a rating company (whether the rating mark itself is authentic or not), and whether the fact that the rating mark is pasted on the Web page of the Web site of the rating target is truly the fact that has been granted by the rating performer who has issued and is managing the rating mark, and so forth.

Furthermore, since the falsification of rating marks is prevented through the use of the digital signature technology, a rating performer would never lose its credibility, and would be able to sell rating marks that explicitly indicate evaluation results to those rating targets who attempt to take advantage of the result of the evaluation performed on them.

In the present embodiment, the Web page has been explained as being displayed regardless of the verification result of the rating mark validity, however, the display of the Web page may be configured to occur only when the rating mark is found valid.

### Effect

As explained heretofore, according to the present invention, a rating browser may easily confirm the validity of rating information that has been publicly disclosed over a network using a WWW system.

As a result, the authority and credibility of those detailed corporate information provided by a rating performer would never be damaged, so that the rating performer may be able to sell rating marks to rating targets.

A rating target may be able to appeal themselves to investors or customers using its rating mark.

A rating browser may be able to use the rating mark as one dependable basis for determining whether to make an investment or to have a business transaction.

The specification and drawings are, accordingly, to be regarded in an illustrative rather than a restrictive sense. It will, however, be evident that various modifications and changes may be made thereto without departing from the broader spirit and scope of the invention as set forth in the claims.

## Claims

1. A rating information publishing system comprising a rating browser device, a rating target device and a rating performer device, which are interconnected via a network;
said rating performer device comprising;
a unit for generating rating marks for rating targets;
a rating mark database for managing the generated rating marks;
a unit for receiving a rating mark acquisition request from said rating target device; and
a unit for sending a corresponding rating mark to said rating target device in response to said acquisition reelulest;
said rating target device comprising;
a unit for sending a rating mark acquisition request to said rating performer device;
a unit for receiving a rating mark from said rating performer device;
a Web page database for holding Web pages to which said rating mark is attached, said Web pages being accessible from said rating browser device;
a unit for receiving an acquisition request for one of said rating-mark-attached Web pages from said rating browser device; and
a unit for sending said rating-mark-attached Web page to said rating browser device by referencing to said Web page database in response to said acquisition request; and
said rating browser device comprising;
a unit for sending an acquisition request for a rating-mark-attached Web page to said rating target device;
a unit for receiving said rating-mark-attached Web page from said rating target device;
a unit for verifying the validity of the rating mark included in said rating-mark-attached Web page; and
a unit for displaying said rating-mark-attached Web page and the verification result.

2. A rating information publishing system according to claim 1 wherein;
said rating performer device further comprises;
a unit for modifying the status information associated with the respective rating marks being managed by said rating mark database;
a unit for receiving a rating mark verification request from said rating browser device; and
a unit for verifying the validity of a corresponding rating mark by referencing said rating mark database in response to said rating mark verification request, and sending the result to said rating browser device; and
said rating browser device further comprises;
a unit for sending a rating mark validity verification request to said rating performer device; and
a unit for receiving the result of said verification request from said rating performer device.

3. A rating information publishing system comprising a rating browser device, a rating target device, and a rating performer device that are interconnected via a network;
said rating performer device comprising;
a rating mark database for managing rating marks;
a unit for receiving a rating mark verification request from said rating browser device; and
a unit for verifying the validity of a corresponding rating mark by referencing said rating mark database in response to said verification request, and sending the result to said rating browser device;
said rating target device comprising;
a Web page database for holding Web pages to which said rating mark is attached, said Web pages being accessible from said rating browser device;
a unit for receiving an acquisition request for one of said rating-mark-attached Web pages from said rating browser device; and
a unit for sending said rating-mark-attached Web page to said rating browser device by referencing said Web page database in response to said acquisition request; and
said rating browser device comprising;
a unit for sending an acquisition request for a rating-mark-attached Web page to said rating target device;
a unit for receiving said rating-mark-attached Web page from said rating target device;
a unit for verifying the validity of the rating mark included in said rating-mark-attached Web page;
a unit for sending a rating mark validity verification request to said rating performer device;
a unit for receiving the result of said verification request from said rating performer device; and
a unit for displaying said rating-mark-attached Web page and the verification result.

4. A rating information publishing system according to claim 3 wherein;
said rating performer device further comprises;
a unit for receiving a rating mark acquisition request from said rating target device;
a unit for generating a rating mark for a rating target based on said acquisition request;
a unit for registering said generated rating mark to said rating mark database; and
a unit for sending said generated rating mark to said rating target device which has sent said acquisition request; and
said rating target device further comprises;
a unit for sending a rating mark acquisition request to said rating performer device; and
a unit for receiving a rating mark from said rating performer device.

5. A rating information publishing system according to claim 1 wherein;
said rating performer device further comprises a unit for notifying to said rating target device that said rating target may obtain a rating mark; and
said rating target device further comprises a unit for receiving said notification from said rating performer device.

6. A rating information publishing system according to claim 1 wherein said rating mark database holds detailed information associated with the rating target; and
said rating performer device further comprises ;
a unit for receiving an acquisition request of said detailed information from said rating browser device; and
a unit for sending the corresponding detailed information to said rating browser device by referencing said rating mark database in response to said detailed information acquisition request; and
said rating browser device further comprises;
a unit for sending an acquisition request for detailed information on a rating target to said rating performer device; and
a unit for receiving said detailed information from said rating performer device.

7. A rating information publishing system according to claim 1 wherein said unit for verification utilizes a digital signature technology and a digital watermark technology.

8. A method for disclosing rating information wherein;
a rating performer generates a rating mark indicative of the assessment on a rating target based on the result of review conducted over said rating target, and sands the rating mark to said rating target;
a rating target publishes a Web page to which said obtained rating mark is attached; and
a rating browser obtains said rating-mark-attached Web page, and verifies the validity of said rating mark by using a rating mark validity verification unit.

9. A method for disclosing rating information according to claim 8 wherein;
said rating performer manages state information of rating marks it has generated in a manner that, when an assessment of a rating target has to be changed after a rating mark is sent to said rating target, the rating mark is invalidated by modifying said status information;
said rating browser requests to said rating performer to verify the validity of the rating mark included in a rating-mark-attached Web page published by said rating target; and
said rating performer references the status information associated with said rating mark in response to the rating mark validity verification request from said rating browser, and notifies the validity or invalidity of the rating mark to said rating browser.

10. A method for disclosing rating information acccrding to claim 8 wherein;
said rating performer manages detailed information of rating targets;
said rating browser requests said rating performer to provide the detailed information on one of said rating targets; and
said rating performer sends said detailed information to said rating browser in response to the request for provision of the detailed information of the rating target from said rating browser.

11. A method for disclosing rating information according to claim 8 wherein said validity verification unit utilizes a digital signature technology and a digital watermark technology.

12. A method for disclosing rating information according to claim 8 wherein said validity verification unit utilizes a hyperlink technology of a WWW system.

13. A rating browser device comprising;
a unit for requesting a Web page acquisition to a rating target device;
a unit for analyzing and displaying the obtained Web page; and
a rating mark verification unit for performing verification of a rating mark when the obtained Web page contains the rating mark.

14. A rating browser device according to claim 13 wherein said rating mark verification unit confirms the validity based on the information contained in said rating mark and the information associated with said obtained Web page.

15. A rating browser device according to claim 14 wherein said rating mark verification unit further requests the validity verification of said rating mark to a rating performer device which manages said rating mark, and confirms the validity of said rating mark based on the verification result returned from said rating performer device.

16. A rating performer device comprising;
a rating mark database for managing rating marks;
a unit for receiving a rating mark validity verification request;
a status determination unit for determining a status of a corresponding rating mark by conducting a search over said rating mark database in response to said verification request; and
a unit for sending said determination result to the requestor.

17. A rating performer device according to claim 16 further comprising a rating mark issuance unit for generating a rating mark based on information associated with a Web page to which said rating mark is attached and an image data representing a corresponding rating in response to a rating mark acquisition request.

18. A storage medium storing a rating mark verification program to be executed by a rating browser device, said rating mark verification program being designed to execute;
a step, when a Web page obtained by said rating browser device contains a rating mark, of performing a validity verification of the rating mark based on the information contained within said rating mark and information associated with said Web page;
a step of requesting a validity verification of said rating mark to a rating performer device which manages said rating mark; and
a step of confirming the validity of said rating mark based on the verification result returned form said rating performer device.
